Europäisches Patentamt

European Patent Office

Office européen des brevets

(19)

(11) **EP 1 081 220 A1**

(12) # EUROPEAN PATENT APPLICATION

(43) Date of publication:
07.03.2001 Bulletin 2001/10

(51) Int Cl.$^7$: **C12G 3/04**, A23L 1/19,
A23C 13/12

(21) Application number: 00650101.9

(22) Date of filing: 11.08.2000

(84) Designated Contracting States:
**AT BE CH CY DE DK ES FI FR GB GR IE IT LI LU
MC NL PT SE**
Designated Extension States:
**AL LT LV MK RO SI**

(30) Priority: **20.08.1999 EP 99650072**

(71) Applicants:
• **Murphy, Michael Laurence
Kilworth, County Cork (IE)**
• **Murphy, Timothea Miriam
Fermoy, County Cork (IE)**

(72) Inventors:
• **Murphy, Michael Laurence
Kilworth, County Cork (IE)**
• **Murphy, Timothea Miriam
Fermoy, County Cork (IE)**

(74) Representative: **O'Connor, Donal Henry
c/o Cruickshank & Co.,
1 Holles Street
Dublin 2 (IE)**

(54) **An alcoholic cream**

(57) An alcoholic cream that is heat resistant and floats on beverages. The alcoholic cream contains a hydrocolloid fluid gelling agent at a content sufficient to form a solid gel, which is subsequently sheared. This enables the fat content of the alcoholic cream to be high or low. It also allows the alcoholic cream to float on beverages, whilst maintaining its inherent stability and remaining immiscible with other liquids whether hot or cold.

EP 1 081 220 A1

**Description**

**Introduction**

The present invention relates to an alcoholic cream or as it is often more commonly referred to as a cream liqueur.

In terms of commercial practice, a standard cream liqueur does not exist. If one was to generalise, it could be suggested that cream liqueurs regularly include milk fat, milk proteins, sugar, alcohol and water. Generally a cream liqueur has a taste other than simply that of cream as the alcohol added is usually in the form of an alcoholic drink having a taste in its own right such as whiskey, brandy, rum, liqueurs and fortified wines. Thus, the term an alcoholic cream can be considered to be somewhat broader as it encompasses any alcohol mixed with milk fat. The alcohol strength or the amount of alcohol used is such that it is high enough to prevent microbial growth.

The milk fat gives a cream liqueur its organoleptically rich cream mouth feel character. However, if the fat content in a cream liqueur exceeds a certain level, the fat comes out of the emulsion, rising to the top of the bottle forming a sealed layer on the top of the bottle. This is extremely impractical as it must be pierced to allow the cream liqueur to be poured and this decreases consumer desirability.

The fat used in cream liqueurs is high in saturated fats. Continual consumption of saturated fats has been shown to be connected with the development of degenerative diseases including cardiovascular disease, cancer, diabetes, multiple sclerosis (MS) and many others. It would be useful to provide a cream liqueur of low fat content. However, the organoleptic quality of such low fat products is presently thought to be inferior.

Ireland is famed for its Irish coffee which traditionally consists of a measure of Irish whiskey, sugar and strong black coffee and topped off with slightly aerated cream. Many varieties of this drink exist using multiple liqueurs, with one common factor, the cream topping. The true flavour of the liqueur coffee is obtained by drinking the coffee and liqueur through the cream. The cream is aerated by whipping in order for the cream to float on top of the coffee. However, the shelf life of the cream is very short. If the cream is over whipped, the cream sinks into the coffee completely destroying the traditional drink.

It would be valuable to provide an alcoholic cream that could be used to top a liqueur coffee. Traditional cream liqueurs do not float on top of hot coffees. Such an alcoholic cream or cream liqueur with the appropriate alcohol could further enhance the taste of the liqueur coffee.

In this specification, unless otherwise indicated, the term "cream" refers to an emulsion of fat globules encased in proteins or a cream substitute that has the organoleptic mouth feel qualities of natural cream and can additionally contain alternative fat to milk fat, protein, emulsifiers, sugars and stabilisers.

The term "milk fat" refers to the fat that is unique to milk.

The term "fluid gelling agent" refers to the active ingredient which when mixed with water at concentrations sufficient to form a solid gel can subsequently be sheared to form a fluid gel.

The term "alcoholic cream" refers to a cream that has both the properties of natural cream and cream liqueurs.

The term "fluid gel" refers to a gel that has been sheared after setting or during the process of setting.

**Statements of Invention**

The invention describes an alcoholic cream of the type comprising cream and alcohol, characterised in that the alcoholic cream includes a fluid gelling agent, the fluid gelling agent is at a concentration sufficient to form a gel which is subsequently sheared.

The fluid gel forms a matrix with the fats in the cream and the alcohol, having the resultant effect of encapsulating both the fats and the alcohol in the gel matrix. By encapsulating the fat in the gel, the matrix enables the fat concentration to be increased to high levels that would normally result in the fat coming out of the emulsion.

In a preferred embodiment of the invention, the concentration of the fluid gelling agent is between 0.05% and 2% by weight, preferably between 0.15% and 0.3% by weight. There is a minimum concentration of fluid gelling agent required in order for the gel matrix to perform the above described effects.

In another embodiment of the invention, the fluid gel is heat resistant or forms a complex with the cream or milk proteins conferring resistance to heat. In another embodiment of the invention, the alcoholic cream can be floated on hot or cold beverages. The gel matrix surrounding the alcohol and cream encapsulates the fats, enabling the alcoholic cream to float on hot beverages without melting. The matrix protects the fats from melting and surprisingly also protects gelling agents with melting points lower than the temperature of a hot beverage from melting due to the formation of a complex between the gelling agent and the cream or milk protein. Additionally, the property of encapsulating the fats by the gel matrix in the alcoholic cream has the effect to confer the specific gravity properties of the fat to the gel matrix enabling the alcoholic cream to float on both hot and cold beverages. Generally, alcoholic creams do not float on hot or cold beverages but mix with them.

The advantage of these properties of the alcoholic cream is that it can be used in the preparation of liqueur coffees.

In a preferred embodiment, the fluid gelling agent is a hydrocolloid. In an especially preferred embodiment, the fluid gelling agent is selected from the group comprising:-

gellan gum;
pectin;
agarose;
agar;
carrageenan;
locust bean gum;
other hydrocolloids or combinations of hydrocolloids that form a stable fluid gel.

Hydrocolloids form stable fluid gels.

In a preferred embodiment of the invention, the alcohol content is up to 30% by volume, greater than 6% by volume and preferably of the order of 17% by volume. This alcohol content should be sufficient to prevent microbial growth.

The fat content of the alcoholic cream is up to 50% by weight, greater than 6% by weight and less than 35% by weight, preferably between 18 and 25% by weight.

The advantage of encapsulating the fat in the gel matrix enables the fat content to be increased to high levels that would normally result in the fat coming out of the emulsion. Similarly, the fat content can be lowered, in one embodiment the fat content is between 6-10% by weight and the gel matrix maintains the organoleptic properties of higher fat levels in the alcoholic cream. Other hydrocolloids may also be used to give improved organoleptic qualities to the low fat liqueur.

In another embodiment, an emulsifier is not required. Generally, alcoholic creams require the presence of an emulsifier to keep the fats in an emulsion.

While the alcoholic cream according to the invention forms a beverage in its own right in other instances it may be incorporated in a beverage and thus the invention provides a beverage incorporating such an alcoholic cream which would incorporate an additional liquid selected from a group comprising liqueurs and other alcoholic and non-alcoholic beverages.

Ideally such a beverage would have a pH of between 5.0 and 5.5 and preferably in the range 5.2 to 5.3.

Such a beverage could include anything from between 25 to 75% alcoholic cream and possibly more likely of the order of 50% by volume of the beverage.

## Detailed Description of the Invention

The invention will be more clearly understood given by way of example with reference to the following examples.

In this specification for consistency in the Examples the audition of alcohol has been referred to as being added by weight when in almost all instances in practice it is always referred to as being added by volume whether it is absolutely pure or not. Thus, a whiskey would be referred to as being added by volume which is not an accurate measurement of the percentage alcohol in the final product. Approximately 14% by weight alcohol represents 17% by volume. Thus in reading the description and claims it is important to be aware of this, since percentage by volume is the most common way in which the addition of alcohol to beverages is referred to this is how it is claimed.

The alcoholic cream is made in two discrete operations or processes. In the first Part 1, a gelling solution is made separately to the rest of the product and added to the rest of the solution as a hot liquid prior to homogenisation. Part 2 involves the further addition of the ingredients.

A gelling solution can be defined as an agent capable of converting water from a flowable liquid to a de-mouldable gel or solid. A fluid gel is a pourable gel. Examples of gelling agents are gellan gum, agar, gelatin, starch, pectin, carrageenan, methyl cellulose, agarose, dextran, rhamsan gum, xanthan gum, welan gum, locust-bean gum, tamarind gum and guar gum to name but a few. The gelling agent that is used preferably in the present invention is gellan gum but other agents can be used. Gellan gum is considered heat resistant due to its high melting point exceeding 80°C as is agar and agarose with melting points above 80°C and carrageenan which has a melting point of approximately 70°C. However, it seems to form a complex with calcium ions in the cream topping which raises the melting point sufficiently to allow it to float on hot beverages.

Gellan gum is a mult; functional gelling, texturising, stabilising, film-forming and suspending agent whose properties offer numerous advantages in the commercial production of food and other products. Gellan gum, the commercial product, is a low acyl product sold under the Trade Mark KELCOGEL®. In order to form a gel, gellan gum must first be hydrated and then allowed to form the gel. Gellan gum forms gels with almost all ions, with divalent ions having a much stronger affinity than monovalent ions. To achieve hydration of gellan gum, ions have to be removed from or at very low concentration in the aqueous environment, as the presence of ions greatly inhibits hydration. A convenient way to do this is to use a sequestrant, or ion removing agent, for example, sodium citrate, which removes ions and sets up an equilibrium situation. Hydration of gellan gum is easily achieved by dispersing the gum in deionised water in the absence of a sequestrant and heating to at least 70°C. Ions, such as sodium or calcium, are then added to the hot solution, causing it to gel on cooling. Fluid gels are commonly formed by agitating the fluid mix during the cooling cycle which disrupts the normal gel formation process. Fluid gels may also be made by breaking up the gel and shearing it after it has set. Very low levels of gellan gum produce fluid gels, typically in the range of 0.04 to 0.3%.

The alcoholic cream in which gellan is used to produce the fluid gel is made in two discrete operations or processes. In the first part, Part 1, the gellan solution is made separately to the rest of the product and added to the rest of the solution as a hot liquid prior to homogenisation. Part 2 involves the addition and heating of the other ingredients.

In the present invention, the gellan solution is made by adding first sodium citrate and then the gellan powder to the water. The mixture must be heated to 80°C while being agitated, to ensure complete solubilisation and activation of the gellan. The gellan solution may also be manufactured by adding the gellan powder to deionised water, with no added sequestrant and heating to above 70°C.

As stated above, the second part involves the mixing and heating of the ingredients to form the base for the alcoholic cream. The ingredients consist of fat, alcohol and water. The general procedure is as follows:

1. The fat, for example, milk fat, vegetable fat, vegetable oil or animal fat and some of the water are added to the mixing vessel and heated to 40°C while agitating.

2. Additional protein, for example whey protein concentrate, sodium caseinate, potassium caseinate, soya protein, egg albumin or hydrolysed gelatine and an emulsifier, for example, sodium stearyl lactylate (SSL - manufactured by the Quest Company), glycerol monostearate (GMS), lecithin or lecithin derivatives are added and heating is continued to 60°C. it is not always necessary to include an emulsifier.

3. The alcohol, which has been previously diluted to 60% strength with the remainder of the water and the heated gellan solution is added to the solution and mixed for several minutes to ensure even distribution of the gel. The gellan solution is held at approximately 80°C to maintain it as a liquid. The alcohol in this example has been added before homogenisation. However, addition of the alcohol after homogenisation is also possible.

4. The solution at between 50 and 60°C is homogenised using a two-stage homogenisation, at 3500 psi first stage and 500 psi second stage homogenisation pressure. It is possible that homogenisation using a single stage homogenisation or homogenisation of much lower pressure be used. Alternatively, the product is homogenised before the addition of the gelling solution which is subsequently added, mixed and homogenised a second time.

5. Following homogenisation the mixture is cooled using an agitated jacketed tank and cold water or a scraped surface heat exchanger. It is most important that the solution receives thorough shearing while cooling. However, any type of heat exchanger which provides shearing while cooling the solution below the setting point of the gelling agent may be used. The mix is cooled to between 13°C and 0°C. Alternatively, after the gelling solution has been added and the mixture homogenised, the entire mixture may be allowed to set and is subsequently sheared after cooling.

6. The cream liqueur may be further modified via the addition of sweeteners and flavours. Sweeteners such as fructose, sorbitol and flavours may be added to the cream topping before or after homogenisation and cooling.

7. A sequestrant, for example, sodium citrate, sodium hexametaphosphate or EDTA may be added to the final solution to prevent further gelation. 0.2% sodium citrate may be added before or after cooling and homogenisation. Alternatively, any sequestrant which binds the calcium thus preventing gelation over time may be used. It is also possible that if the mixture has been manufactured with deionised water and washed cream, that less or no sequestrant may be needed to prevent gelation over time.

The alcoholic cream which uses gellan gum to provide the fluid gel is made in two stages for two reasons. Firstly, because the gellan gum will not hydrate in the presence of ions, therefore it must be dissolved in deionised water or water with added sequestrant. Secondly, because of the high temperature required to make the solution. However, if other gelling agents are to be used instead of gellan gum to provide the fluid gel, such as agar or carrageenan, it may be possible to prepare the alcoholic cream in a one step process.

Part 1 of the manufacturing process would be removed and Steps 1-7 of Part 2 would be carried out as previously described, with the addition of the gel powder at step 2, along with the other powdered ingredients. The alcohol is then added alone at step 3 or after homogenisation.

The following examples demonstrate differing combinations of the ingredients to form the alcoholic cream.

## EXAMPLES

Each of these examples is carried out using a two-part process.

## Part 1 - The Gelling Solution

Gellan gum is the gelling agent which is preferably used according to the present invention, although other agents or combinations thereof may be used.

It would appear that according to the experiments that have been performed to date, a concentration of 0.16% gellan gum is optimal in the final mixture. When the gellan gum levels were below 0.16%, sufficient stability was not provided when the alcoholic cream was poured on top of a hot beverage.

Part 1 as used for the following Examples:

| Ingredients | % by weight | % in final mix |
|---|---|---|
| Gellan gum | 2.00 | 0.16 |
| Sodium Citrate | 0.10 | 0.008 |
| Water | 98.00 | 7.84 |
| | 100.10 | 8.00 |

Throughout these Examples, the gellan solutions were prepared by adding first the sodium citrate and then the gellan to the water and heating to 85°C to hydrate the gellan. The mixture was then allowed to cool and set, and was re-melted before addition to the cream base.

As previously mentioned, the use of deionised water would make the sodium citrate or other sequestrants unnecessary but necessitate the addition of an ion source to provide the gel.

An alternative method of manufacture is to hold the hydrated gellan as a hot liquid until addition to the cream base, this is the method which would be used on a commercial scale. It may also be possible to hydrate the gellan solution and add the heated cream base ingredients on top of the gellan solution.

The following Examples 1 to 24 demonstrate alcoholic cream formulations which can be consumed as beverages in their own right.

The alcoholic cream according to all formulations has excellent ability to float on both cold and hot beverages and does not melt on hot beverages. All alcoholic cream formulations have good long term stability at both ambient temperature and at 45°C.

From the experiments that have been performed to date, it would appear that when poured on a hot beverage, that is a beverage with a temperature less than 80°C, certain of the formulations form a thick gelled layer appearance at the surface. This was found to be reduced by choosing an appropriate additional protein ingredient. Aging the alcoholic cream for a number of weeks also reduced the thick gelled layer.

In Examples 1-24, the fat used is from the milk fat that is found in cream, although other fats can also be used.

## EXAMPLES 1-4

Initial trials were carried out using sodium caseinate as the emulsifying protein. Trials were carried out at various levels of fat and sodium caseinate, as demonstrated below.

## Example 1

The alcoholic cream produced had 25% fat in the final product. 3.22% potassium caseinate and 0.46% sodium stearyl 2 lactylate were added as emulsifiers.

The alcoholic cream had 15.13% alcohol by weight, this value corresponds to approximately 18% alcohol by volume. The target alcohol level was 17% by volume, the extra alcohol was added to allow for alcohol losses which occur when using a pilot scale plant.

Homogenised at 2000psi was carried out, cooling followed homogenisation in an agitated jacketed tank to 16°C.

0.2% sodium citrate was added after cooling, to prevent age gelling.

| Ingredients | % in total w/w |
|---|---|
| Gelling solution | 8.00 |
| Cream (50% fat) | 50.00 |
| SSL | 0.46 |
| Sodium caseinate | 3.22 |
| Alcohol (96% vol) | 15.13 |
| Water | 23.18 |
| | 100.00 |

This product showed an excellent ability to float on hot and cold beverages, and good long term stability at both ambient temperature and 45°C.

## Example 2

This alcoholic cream contained 30% fat in the final product. Emulsifiers and alcohol as in Example 1 were used with the level of sodium caseinate reduced to 1.6%.

Homogenisation was carried out at 2000psi, following homogenisation the product was cooled in an agitated jacketed tank to 13°C.

| Ingredients | % in total w/w |
|---|---|
| Gelling solution | 8.00 |
| Cream (50% fat) | 60.00 |
| SSL | 0.46 |
| Sodium caseinate | 1.60 |
| Alcohol (96% vol) | 15.13 |
| Water | 14.81 |
| | 100.00 |

This product showed an excellent ability to float on hot and cold beverages, and good long term stability at both ambient temperature and 45°C.

## Example 3

The alcoholic cream has contained 22% fat in the final product. Emulsifiers as in Example 1 with the level of sodium caseinate reduced to 1%.

Homogenisation was carried out at 2000psi, following homogenisation product was cooled in an agitated jacketed tank to 12°C.

As with previous Examples, 0.2% sodium citrate was added after manufacture.

| Ingredients | % in total w/w |
|---|---|
| Gelling solution | 8.00 |
| Cream (48.5%) | 45.36 |
| SSL | 0.46 |
| Sodium caseinate | 1.00 |
| Alcohol (96% vol) | 15.13 |
| Water | 30.05 |
| | 100.00 |

This product showed an excellent ability to float on hot and cold beverages, and good long term stability at both ambient temperature and 45°C.

## Example 4

The alcoholic cream contained 22% fat in the final product. Emulsifiers as in Example 1 with the level of sodium caseinate reduced to 0.5%.

Homogenisation was carried out at 2000psi, following homogenisation product was cooled in an agitated jacketed tank to 12°C.

As with previous examples, 0.2% sodium citrate was added after manufacture.

| Ingredients | % in total w/w |
|---|---|
| Gelling solution | 8.00 |
| Cream (48.5% fat) | 45.36 |
| SSL | 0.46 |
| Sodium caseinate | 0.50 |
| Alcohol (96% vol) | 15.13 |
| Water | 30.55 |
| | 100.00 |

This product showed an excellent ability to float on hot and cold beverages, and good long term stability at both ambient temperature and 45°C.

The following three examples of alcoholic cream used whey protein in place of the sodium caseinate as the protein emulsifier. Varying levels of the whey protein and fat have been used. The whey protein is a 77% protein concentrate.

Alcohol in all cases is as per Example 1. In these experiments, the sodium citrate was added at the same level, before homogenisation.

## Example 5

The alcoholic cream contained 22% fat in the final product. Homogenisation pressures of 2500 psi. Cooled to 12°C in the agitated jacketed tank.

| Ingredients | % in total w/w |
|---|---|
| Gelling solution | 8.00 |
| Cream (48.5% fat) | 45.36 |
| SSL | 0.46 |
| Whey Protein | 0.80 |
| Alcohol (96% vol) | 15.13 |
| Sodium citrate | 0.20 |
| Water | 30.05 |
| | 100.00 |

## Example 6

The alcoholic cream contained 22% fat in the final product. Homogenisation pressures of 2500psi. Cooled to 11°C in the agitated jacketed tank.

| Ingredients | % in total w/w |
|---|---|
| Gelling solution | 8.00 |
| Cream (48.5% fat) | 45.36 |

(continued)

| Ingredients | % in total w/w |
|---|---|
| SSL | 0.46 |
| Whey Protein | 0.50 |
| Alcohol (96% vol) | 15.13 |
| Sodium Citrate | 0.20 |
| Water | 30.35 |
| | 100.00 |

### Example 7

The alcoholic cream contained 30% fat in the final product. Homogenisation pressures of 2500psi. Cooled to 13°C in the agitated jacketed tank.

| Ingredients | % in total w/w |
|---|---|
| Gelling solution | 8.00 |
| Cream (48.5% fat) | 61.85 |
| SSL | 0.46 |
| Whey Protein | 0.80 |
| Alcohol (96% vol) | 15.13 |
| Sodium Citrate | 0.20 |
| Water | 13.96 |
| | 100.00 |

Each example 5, 6 and 7 had an excellent ability to float on hot and cold beverages, and good long term stability at 45°C. Examples 5 and 6 had good long term stability at ambient temperature. Example 7, however, displayed signs of age thickening after 4 weeks at ambient temperature.

### Example 8

The alcoholic cream contained 22% fat and was made using both 0.5% whey protein and 0.5% sodium caseinate as the protein emulsifiers. Homogenisation pressures of 2500psi. Cooled to 14°C in the agitated jacketed tank.

| Ingredients | % in total w/w |
|---|---|
| Gelling solution | 8.00 |
| Cream (48.5% fat) | 45.36 |
| SSL | 0.46 |
| Whey Protein | 0.50 |
| Sodium Caseinate | 0.50 |
| Alcohol (96% Vol) | 15.13 |
| Sodium Citrate | 0.20 |
| Water | 29.85 |
| | 100.00 |

This product showed an excellent ability to float on hot and cold beverages, and good long term stability at both ambient temperature and 45°C.

### Example 9

The alcoholic cream contained 22% fat and the whey protein was replaced by 1% of a hydrolysed gelatine.

Homogenisation pressures of 2500psi. Cooled to 11°C in the agitated jacketed tank.

| Ingredients | % in total w/w |
|---|---|
| Gelling solution | 8.00 |
| Cream (48.5% fat) | 45.36 |
| SSL | 0.46 |
| Gelatine | 1.00 |
| Alcohol (96% vol) | 15.13 |
| Sodium Citrate | 0.20 |
| Water | 29.85 |
| | 100.00 |

This product showed an excellent ability to float on hot and cold beverages, and good long term stability at both ambient temperature and 45°C.

## Examples 10, 11 and 12

Stable products were produced replacing the whey protein with 1.5% and 3% milk protein isolate and 4% skim milk powder.
The skim milk powder samples provided a floating layer on a hot beverage but were found to have an off-taste.
The samples produced with milk protein isolate produced a good floating layer on a hot beverage.

## Example 13

The alcoholic cream has been produced at 30% fat, without added protein emulsifier. The sample was homogenised at 2000psi first stage and 500psi second stage. The sample was then cooled in an agitated jacketed tank.

| Ingredients | % in total w/w |
|---|---|
| Gelling solution | 8.00 |
| Cream (48.5% fat) | 61.85 |
| SSL | 0.46 |
| Alcohol (96% vol) | 15.13 |
| Sodium Citrate | 0.20 |
| Water | 13.96 |
| | 100.00 |

On cooling, the product showed some signs of churning, indicating that the emulsion was unstable.

## Example 14

This product has been produced with 22% fat in the final product. The use of potassium caseinate as a protein source has been investigated in this example.

| Ingredients | % in total w/w |
|---|---|
| Gelling solution | 8.00 |
| Cream (48.5% fat) | 45.36 |
| SSL | 0.46 |
| Potassium Caseinate | 0.50 |

(continued)

| Ingredients | % in total w/w |
|---|---|
| Alcohol (96% vol) | 15.13 |
| Sodium Citrate | 0.20 |
| Water | 30.34 |
| | 100.00 |

This product showed an excellent ability to float on hot and cold beverages, and good long term stability at both ambient temperature and 45°C.

## Example 15

The use of potassium caseinate as a protein source in conjunction with higher levels of fat in the final product has been investigated in this example. The product has been manufactured with 30% fat in the final product. Homogenisation pressures 3000psi. Cooled to 2°C using a high shear scraped surface heat exchanger.

| Ingredients | % in total w/w |
|---|---|
| Gelling solution | 8.00 |
| Cream (48.5% fat) | 61.85 |
| SSL | 0.46 |
| Potassium Caseinate | 0.50 |
| Alcohol (96% vol) | 15.13 |
| Sodium Citrate | 0.20 |
| Water | 13.96 |
| | 100.00 |

This product showed an excellent ability to float on hot and cold beverages, and good long term stability at both ambient temperature and 45°C. Use of the heat exchanger to provide lower cooling temperatures and increased shear while cooling produces a smoother final product.

## Example 16

This product has been produced with 22% fat in the final product. Potassium caseinate has again been used as the protein source, the other emulsifier used in this case is glycerol monostearate (GMS).
Product has been homogenised at 3000psi and cooled to 0°C in the scraped surface heat exchanger.

| Ingredients | % in total w/w |
|---|---|
| Gelling solution | 8.00 |
| Cream (48.5% fat) | 45.36 |
| GMS | 0.46 |
| Potassium Caseinate | 0.50 |
| Alcohol (96% vol) | 15.13 |
| Sodium Citrate | 0.20 |
| Water | 30.34 |
| | 100.00 |

## Example 17

This product contains reduced fat. It is possible to produce a cream tasting product with fat levels below 10%. The sample was homogenised at 4000 psi first stage and 500 psi second stage. The sample was then cooled to 3°C by a high shear scraped surface cooler.

| Ingredients | % in total w/w |
|---|---|
| Gelling solution | 8.00 |
| Cream (50% fat) | 12.00 to 6% total fat |
| Liquid sugar | 22.75 |
| Granulated sugar | 1.70 |
| Sodium stearyl lactylate | 0.46 |
| Sodium Citrate | 0.27 |
| Sodium Caseinate | 2.00 |
| Sorbitol | 4.00 |
| Alcohol | 15.00 |
| Colours | 0.50 |
| Flavours | 0.30 |
| Deionised Water | 33.02 |
| | 100.00 |

## Example 18

The alcoholic cream was produced at 25% fat, with 1% potassium caseinate, without low molecular weight surfactant. The sample was homogenised at 4000psi first stage and 500 psi second stage. The sample was then cooled to 3°C in a high scraped surface exchanger.

| Ingredients | % in total w/w |
|---|---|
| Gelling solution | 8.00% |
| Cream (50% fat) | 50.00 (to 25% fat) |
| Potassium caseinate | 1.00 |
| Alcohol (96% vol) | 15.13 (to 18% total alcohol) |
| Fructose | 2.00 |
| Sodium Citrate | 0.20 |
| Water | 23.67 |
| | 100.00 |

## Example 19

This example shows the use of spirits other than neutral spirit in the manufacture of the alcoholic cream of 25% fat. In this example whiskey has been used to produce an alcoholic cream with a distinctive whiskey flavour.

| Ingredients | % in total w/w |
|---|---|
| Gelling solution | 8.00 |
| Cream | 50.35 |
| SSL | 0.45 |
| Potassium caseinate | 1.00 |
| Fructose | 2.00 |
| Sodium Citrate | 0.20 |
| Whiskey - 40% vol | 38.00 |
| | 100.00 |

This formulation produced a stable cream topping which floats well on hot and cold beverages. Products have also been produced with other spirits such as Brandy, Gin and Rum and flavoured liqueurs.

**Example 20**

This example shows the use of the fluid gel system to produce a cream liqueur with improved organoleptic qualities. Using cream with 45% fat this example was produced with 20% fat in the final product. This product was stable and had a viscosity more than double that of ordinary cream liqueur at this fat level. Similar trials were carried out at various fat levels between 14% and 22% in the final product.

| Ingredients | % in total w/w |
|---|---|
| Gelling solution | 8.00 |
| Cream | 44.45 |
| Sugar | 15.00 |
| SSL | 0.45 |
| Potassium caseinate | 1.00 |
| Fructose | 2.00 |
| Sodium Citrate | 0.20 |
| Colour and Flavour | 0.40 |
| Neutral Spirit | 15.50 |
| Water | 13.00 |
| | 100.00 |

**Example 21**

The alcoholic cream was produced using agar as the gelling agent. The sample was homogenised at 4000 psi first stage and 500 psi second stage. The sample was then cooled to 2°C in a high shear scraped surface heat exchanger.

| Part 1 | % by weight | % in final product |
|---|---|---|
| Agar | 3.125 | 0.25 |
| Water | 96.875 | 7.75 |
| | 100.0 | 8.00 |

| Ingredients | % in total w/w |
|---|---|
| Gelling solution | 8.00 |
| Cream (50% fat) | 50.00 (to 25% fat) |
| SSL | 0.5 |
| Potassium caseinate | 0.5 |
| Alcohol (96% vol) | 15.13 (to 18% total alcohol) |
| Fructose | 2.00 |
| Sodium citrate | 0.2 |
| Water | 23.67 |
| | 100.00 |

**Example 22**

The product was produced using carrageenan as the gelling agent. The sample was homogenised at 4000 psi first stage and 500 psi second stage. The sample was then cooled to 2°C in a high shear scraped surface heat exchanger.

| Part 1 | % by weight | % in final product |
|---|---|---|
| Carrageenan | 6.25 | 0.1 |
| Water | 93.75 | 7.5 |
| | 100.0 | 8.0 |

| Ingredients | % in total w/w |
|---|---|
| Gelling solution | 8.00 |
| Cream (50% fat) | 50.00 (to 25% fat) |
| SSL | 0.50 |
| Potassium caseinate | 0.50 |
| Alcohol (96% vol) | 15.13 |
| Fructose | 2.00 |
| Sodium citrate | 0.2 |
| Water | 23.67 |
| | 100.00 |

## Example 23

The product contained 22% fat in the final product. Homogenisation pressures of 2500psi. Cooled to 11°C in the agitated jacketed tank.

| Ingredients | % in total w/w |
|---|---|
| Gelling solution | 8.00 |
| Cream (48.5% fat) | 45.36 |
| SSL | 0.46 |
| Whey Protein | 0.50 |
| Alcohol (96% vol) | 15.13 |
| Sodium citrate | 0.2 |
| Water | 30.35 |
| | 100.00 |

The alcoholic cream is mixed in a ratio of 50:50 with an additional liquid selected from the group comprising:-

liqueurs;
other alcoholic and non-alcoholic beverages;

such that the pH of the additional liquid is in the range 5.2-5.3, and poured into a glass to produce a flavoured crea,n liqueur or cocktail. This pH range can be extended between 5.0 to 5.5 but the former range is to be preferred.
The alcoholic cream is blended with the additional liquid by:-

mixing with a stirring stick;
shaking in a cocktail shaker;
using a blender;
using a two sectioned bottle that pours into a common mixing head, thereby obtaining a homogenous mixed product in the glass when poured.

## Example 24

This example describes the manufacture of commercial size batch of a cream topping. The batch size was 2000 kg. The gelling solution was produced and held as a hot solution at 80°C prior to addition to the rest of the ingredients.

| Ingredients | % in total w/w |
|---|---|
| Gelling solution | 8.00 |
| Cream | 50.00 |
| SSL | 0.45 |
| Potassium caseinate | 1.00 |
| Fructose | 2.00 |
| Sodium Citrate | 0.20 |
| Neutral Spirit | 15.50 |
| Water | 22.85 |
|  | 100.00 |

The remainder of the ingredients were added to a second tank and heated to 60°C. This mix was homogenised once at 3500 psi. The hot gellan solution was added and all of the ingredients mixed before the mixture was homogenised for a second time at 3500 psi. The mixture was then cooled to 8°C in a scraped surface heat exchanger.

The manufacturing process, produced a stable cream topping which floats well on both hot and cold beverages.

## Example 25

The viscosity of the cream liqueurs is measured as a means of comparing the organoleptic qualities. Viscosity is a good measure of the organoleptic qualities of the cream toppings and cream liqueurs as generally the increase in viscosity provided by the gel matrix gives the impression of a fat content similar to that of real cream. The viscosity is measured using a Brookfield Digital Viscometer LVTDVI with small sample adapter and no. 18 spindle. A circulating water bath is used to keep the temperature at 20°C +/- 0.05°C. The viscometer is calibrated monthly using a Viscosity Standard Solution 30 centipoise at 25°C.

The sample viscosity is read after 3 minutes in the viscometer.

| Sample | Viscosity 1 day after manufacture |
|---|---|
| Standard Cream Liqueur | 30 cps |
| Cream Topping- 25% fat As per Example 24 | 100 cps |
| Whiskey Flavoured Topping - 25% fat As per Example 19 | 90 cps |
| Brandy Flavoured Topping - 25% fat As per Example 19 | 90 cps |
| Luxurious Cream Liqueur - 14% fat As per Example 20 | 100 cps |
| Luxurious Cream Liqueur - 20% fat As per Example 20 | 180 cps |
| Luxurious Cream Liqueur - 18% fat As per Example 20 | 150 cps |
| Luxurious Cream Liqueur - 16% fat As per Example 20 | 120 cps |

It may be seen that both the cream toppings and the cream liqueurs manufactured using this method have a much higher viscosity than that of standard cream liqueur. This is due to the gel structure formed using this method.

The luxurious cream liqueurs have a higher viscosity than the cream toppings, this is due to the presence of sugar in the luxurious cream liqueurs which increases the viscosity.

## Example 26

This example demonstrates the stability tests that were performed on the alcoholic cream. The tests were performed over a 6 week period.

1. Samples were stored at 45°C.

2. Samples were examined visually once per week for signs of:-

(a) Emulsion splitting, i.e. separation into two distinct layers or serum at the base of the sample.
(b) Creaming, i.e. a fat layer at the surface of the bottle.
(c) Gelling, i.e. a thickened layer at the surface of the bottle.

The alcoholic cream according to the present invention as well as being a product in its own right may also be used as an additive or constituent of other products since its inherent properties such as, for example, its high alcoholic level may be very valuable when incorporated in other products.

In the specification, the terms "comprise, comprises, comprised and comprising" or any variations thereof and the terms "include, includes, included and including" or any variation thereof are considered to be totally interchangeable and they should all be afforded the widest possible interpretation and vice versa.

The invention is not limited to the embodiment hereinbefore described, but may be varied in construction and detail within the scope of the claims.

## Claims

1.   An alcoholic cream of the type comprising cream and alcohol characterised in that the alcoholic cream includes a fluid gelling agent, the fluid gelling agent is at a concentration sufficient to form a gel which is subsequently sheared.

2.   An alcoholic cream as claimed in claim 1 wherein the concentration of the fluid gelling agent is between 0.05% and 2.0% by weight.

3.   An alcoholic cream as claimed in claims 1 or 2, wherein the concentration of the fluid gelling agent is between 0.15% and 0.3% by weight.

4.   An alcoholic cream as claimed in any preceding claim wherein the fluid gelling agent is a hydrocolloid gelling agent.

5.   An alcoholic cream as claimed in any preceding claim, wherein the fluid gelling agent is selected from the group comprising:

gellan gum;
pectin;
agarose;
carrageenan;
agar;
locust bean gum;
any hydrocolloids or combinations of hydrocolloid gelling agents that form a stable fluid gel.

6.   An alcoholic cream as claimed in any preceding claim, in which the alcohol content is up to 30% by volume.

7.   An alcoholic cream as claimed in claim 6 in which the alcohol content is greater than 6% by volume.

8.   An alcoholic cream as claimed in claim 6 in which the alcohol content is of the order of 17% by volume.

9.   An alcoholic cream as claimed in any preceding claim, in which the alcoholic cream has a fat content up to 50% by weight.

10.   An alcoholic cream as claimed in claim 9, wherein the fat content is between 6 and 35% by weight.

11.   An alcoholic cream as claimed in claim 9, wherein the fat content is between 18% and 25% by weight.

12.   An alcoholic cream that floats on hot or cold beverages of the type comprising alcohol and cream characterised in that the alcoholic cream includes a fluid gelling agent, the gelling agent is at a concentration to form a gel and is subsequently sheared.

13.   A beverage incorporating an alcoholic cream as claimed in any preceding claim and an additional liquid selected from a group comprising liqueurs and other alcoholic and non-alcoholic beverages.

14. A beverage as claimed in claim 13 having a pH in the range 5.0 to 5.5.

15. A beverage as claimed in claim 13 having a pH in the range 5.2 to 5.3.

16. A beverage as claimed in any of claims 13 to 15 in which the alcoholic cream comprises between 25 to 75% by volume of the beverage.

17. A beverage as claimed in any of claims 13 to 15 in which the alcoholic cream comprises of the order of 50% by volume of the beverage.

**European Patent Office**

**EUROPEAN SEARCH REPORT**

Application Number

EP 00 65 0101

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br><br>A | EP 0 292 034 A (EVERS PAULUS HENDRICUS JOHANNN) 23 November 1988 (1988-11-23)<br>* page 2, line 1 - line 8; claims 1,3,4 *<br>* page 2, line 29 - line 32 *<br>* page 2, line 51 - line 53 *<br>* page 2, line 15 - line 17 *<br>* page 2, line 37 - line 41 *<br>--- | 1-5,<br>7-11,13<br>14,15 | C12G3/04<br>A23L1/19<br>A23C13/12 |
| X | EP 0 351 910 A (DMV CAMPINA BV) 24 January 1990 (1990-01-24)<br>* page 2, line 1 - line 4; claims 1,7,10,12,13; tables 2,3 *<br>* page 3, line 34 - line 37 *<br>* page 4, line 28 - line 40 *<br>* page 5, line 14 *<br>* page 5, line 34 - line 35 *<br>* page 4, line 48 - line 49 *<br>--- | 1,2,<br>4-11,13 | |
| X | IE 950 243 A (EDWARD AND JOHN BURKE 1968 LIM) 18 October 1995 (1995-10-18)<br>* page 1, line 1 - line 3; claim 1 *<br>* page 1, line 18 - line 23 *<br>* page 3, line 10 *<br>* page 3, line 12 *<br>* page 2, line 22 - page 3, line 31 *<br>----- | 1,4,5,<br>7-11,13 | **TECHNICAL FIELDS SEARCHED** (Int.Cl.7)<br><br>C12G<br>A23L<br>A23C |

The present search report has been drawn up for all claims

| Place of search | Date of completion of the search | Examiner |
|---|---|---|
| THE HAGUE | 11 January 2001 | Charles, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 00 65 0101

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2001

| Patent document cited in search report | | Publication date | Patent family member(s) | | Publication date |
|---|---|---|---|---|---|
| EP 0292034 | A | 23-11-1988 | NL | 8700955 A | 16-11-1988 |
| | | | AT | 77212 T | 15-07-1992 |
| | | | CA | 1297820 A | 24-03-1992 |
| | | | DE | 3872049 A | 23-07-1992 |
| | | | DE | 3872049 T | 03-12-1992 |
| | | | US | 4943443 A | 24-07-1990 |
| EP 0351910 | A | 24-01-1990 | NL | 8801796 A | 01-02-1990 |
| | | | DE | 68913842 D | 21-04-1994 |
| | | | DE | 68913842 T | 18-08-1994 |
| | | | ES | 2052886 T | 16-07-1994 |
| IE 950243 | A | 18-10-1995 | NONE | | |

EPO FORM P0459

For more details about this annex : see Official Journal of the European Patent Office, No. 12/82